# EUROPÄISCHE PATENTSCHRIFT

(11) **EP 1 769 147 B1**
(45) Veröffentlichungstag und Bekanntmachung des Hinweises auf die Patenterteilung: **29.07.2009**
(21) Anmeldenummer: 05756900.6
(22) Anmeldetag: 23.06.2005
(51) Int. Cl.: F02C 7/143, F02C 7/04

(54) **VERFAHREN ZUM BETRIEB EINER GASTURBOGRUPPE**
METHOD FOR OPERATING A GAS TURBINE GROUP
PROCEDE D'UTILISATION D'UN GROUPE DE TURBINES A GAZ

(30) Priorität: 19.07.2004 CH 121504
(43) Veröffentlichungstag der Anmeldung: 04.04.2007
(73) Patentinhaber: Alstom Technology Ltd, 5400 Baden (CH)
(72) Erfinder: DIAZ, Carlos, Enrique, 45242 Cincinnati OH (US); HOFFMANN, Jürgen, CH-5417 Untersiggenthal (CH); ULLRICH, Andreas, 79787 Lauchringen (DE)
(86) Internationale Anmeldenummer: PCT/EP2005/052930
(87) Internationale Veröffentlichungsnummer: WO 2006/008221

(56) Entgegenhaltungen:
- WO-A-03/089770
- GB-A- 2 051 238
- GB-A- 2 382 847
- US-A- 5 083 423
- US-A1- 2003 106 319

## Beschreibung

### Technisches Gebiet

Die vorliegende Erfindung betrifft ein Verfahren zum Betrieb einer Gasturbogruppe gemäss dem Oberbegriff des Anspruchs 1.

### Stand der Technik

Es ist aus der DE 25 49 790 bekannt, zur Leistungssteigerung einer Gasturbogruppe eine Flüssigkeit in die angesaugte Luft des Verdichters stromauf des Verdichters einzubringen. Der eingedüste Flüssigkeitsmassenstrom wird dabei fallweise derart bemessen, dass neben einem ersten Teilmassenstrom, welcher stromauf des Verdichters in der Ansaugluft verdunstet, ein weiterer Teilmassenstrom als Flüssigkeit in den Verdichter eindringt. Die Flüssigkeit kühlt einerseits durch Verdunstung die Ansaugluft, wodurch der Massenstrom des Arbeitsfluides erhöht wird. Wenn darüber hinaus Flüssigkeit in den Verdichter eindringt, bewirkt diese eine intensive Innenkühlung der Luft während der Verdichtung. Dadurch sinkt die Leistungsaufnahme des Verdichters und die Verdichterendtemperatur. Dies resultiert in einer Steigerung der Netto-Leistungsabgabe und in einem verbesserten Wirkungsgrad des Gasturbinen-Kreisprozesses.

Um eine gut kontrollierte Kühlung und/ oder Leistungssteigerung durch "Wet Compression" oder "Overspray" zu realisieren, wird in der WO03/089770 ein Verfahren zum Betrieb einer Gasturbogruppe vorgeschlagen, in dem die Menge an eingespritztem Wasser in Abhängigkeit von der Ansaugluftmasse geregelt wird. Zur Bestimmung des Verdichteransaugmassenstroms werden verschiedene Verfahren vorgeschlagen. Zum Beispiel ist ein Verfahren in dem der Ansaugmassenstrom in Abhängigkeit der Temperatur der Umgebungsluft und oder die Temperatur in einem Zuströmkanal der Gasturbogruppe stromauf des Verdichters der Gasturbogruppe gemessen wird und in Abhängigkeit des Vorleitreihenstellung des Verdichters bestimmt wird, dargestellt.

Daneben sind zur Leistungssteigerung gerade bei hohen Aussentemperaturen auch andere Methoden zur Kühlung der Ansaugluft von Gasturbogruppen bekannt, beispielsweise Verdunstungskühler, bei denen die Ansaugluft über befeuchtete Oberflächen strömt, oder Kühler mit Wärmetauschern, welche Wärme aus der Ansaugluft abführen.

Unterhalb einer bestimmten Temperatur der Umgebungsluft und gegebenenfalls - sofern nicht das Kühlungsprinzip auf Verdunstungskühlung beruht - oberhalb einer bestimmten Umgebungsluftfeuchte muss die Kühlung der Ansaugluft deaktiviert werden, damit potenziell schädliche Eisbildung am Verdichtereinlass vermieden wird.

Gemäss dem Stand der Technik dient die Kühlung der Ansaugluft primär der Steigerung der Leistungsabgabe über die bei einer bestimmten Umgebungstemperatur verfügbare Grund-Maximalleistung der Gasturbogruppe. Wenn die Umgebungstemperatur oberhalb der kritischen Eisbildungstemperatur liegt, wird die Kühlung, beispielsweise die Flüssigkeitseindüsung freigegeben, und kann bei erhöhtem Leistungsbedarf manuell aktiviert werden. Wie bereits angedeutet, bringt die Kühlung der Ansaugluft und insbesondere die Eindüsung von Flüssigkeit noch weitere Vorteile, beispielsweise eine Steigerung des Wirkungsgrades, und, bei einer vorgegebenen Leistungsabgabe, ein reduziertes Temperaturniveau des gesamten Kreisprozesses. Diese Potenziale werden bei der manuellen Aktivierung der Mittel zur Kühlung nur unvollständig genutzt.

### Darstellung der Erfindung

Es ist ein daher eine Aufgabe der Erfindung, ein Verfahren der eingangs genannten Art so anzugeben, dass die Nachteile des Standes der Technik vermieden werden.

Dies wird erreicht mit dem Verfahren gemäss Anspruch 1.

Kern der Erfindung ist es also, Mittel zur Kühlung des Zuluftstroms des Verdichters einer Gasturbogruppe automatisch zu aktivieren, wenn die entsprechenden Bedingungen, insbesondere hinsichtlich der Umgebungstemperatur oder der Temperatur der Zuströmung stromauf des Verdichters, gegebenenfalls auch hinsichtlich der Luftfeuchtigkeit, für die Freigabe der Kühlung der Ansaugluft, beispielsweise für die Eindüsung von Wasser oder Wasser-Alkohol-Gemischen, erfüllt sind. Die automatische Aktivierung der Mittel zu Kühlung gewährleistet unter anderem, dass die vorteilhaften Wirkungen genutzt werden, sofern eine Kühlung im Rahmen der Betriebssicherheit zulässig ist, ohne dabei die Aufmerksamkeit des Bedienpersonals zu fordern. In einer Ausführungsform der Erfindung ist es selbstverständlich möglich, die Kühlung generell manuell zu deaktivieren, um beispielsweise einzudüsende Flüssigkeit als Betriebsmittel einzusparen.

In einer Ausführungsform der Erfindung werden die Mittel zur Kühlung, beispielsweise eine Vorrichtung zur Einbringung eines Flüssigkeitsmassenstroms, erst aktiviert, wenn diese erste Grenztemperatur, auch als Aktivierungs-Grenztemperatur bezeichnet, wenigstens über eine gewisse Verzögerungszeit von beispielsweise einer Minute dauerhaft überschritten ist.

In einer weiteren Ausführungsform der Erfindung werden die Mittel zur Kühlung, beispielsweise eine Vorrichtung zur Einbringung eines Flüssigkeitsmassenstroms, automatisch deaktiviert, wenn eine zweite Grenztemperatur, auch als Deaktivierungs-Grenztemperatur bezeichnet, unterschritten ist. Diese zweite Grenztemperatur wird insbesondere kleiner gewählt als die erste Grenztemperatur. Beispielsweise wird die zweite Grenztemperatur um 2 oder 5 °C kleiner gewählt als die erste Grenztemperatur. Dieser Unterschied zwischen den beiden Grenztemperaturen vermeidet ein übernervöses Aktivieren und Deaktivieren der Mittel zur Einbringung des Flüssigkeitsmassenstroms. In einer Variante des erfindungsgemässen Verfahrens erfolgt die Deaktivierung der Mittel zur Einbringung des Flüssigkeitsmassenstroms erst, wenn die zweite Grenztemperatur wenigstens über eine zweite Verzögerungszeit von beispielsweise fünf Minuten dauerhaft unterschritten wurde.

Die Verzögerungszeiten, welche für das Ein- und Ausschalten festgelegt werden, sowie der Unterschied zwischen den beiden Grenztemperaturen, dass nämlich die Grenztemperatur, welche eine Deaktivierung der Mittel auslöst kleiner ist als die Grenztemperatur welche eine Aktivierung der Mittel auslöst, erhöhen die Stabilität des automatischen Algorithmus.

Im Stand der Technik ist beispielsweise aus der EP 781 909 bekannt, die Einbringung von Flüssigkeit in die Zuströmung eines Verdichters nach Erreichen der Grund-Volllastleistung einer Gasturbogruppe zu aktivieren. Gemäss der Erfindung wird eine Vorrichtung zur Einbringung des Flüssigkeitsmassenstroms in die Verdichterzuströmung oder andere geeignete Mittel zur Kühlung der Ansaugluft bereits deutlich unterhalb der Grund-Volllastleistung einer Gasturbogruppe aktiviert, insbesondere auch, wenn eine verstellbare Vorleitreihe des Verdichters nicht vollständig geöffnet ist. Die Temperatur, bei welcher eine potenzielle Eisbildung im Verdichtereinlass einsetzt, hängt im Weiteren auch von der Stellung einer verstellbaren Vorleitreihe des Verdichters ab. Wenn diese stark geschlossen ist, kommt es im Bereich der Vorleitreihe zu einer starken Beschleunigung der Strömung, verbunden mit einer Temperaturabsenkung. Das bedeutet, dass potenzielle Eisbildung bereits bei einer höheren Umgebungstemperatur einsetzt als bei einer vollständig geöffneten Vorleitreihe. In einer Ausführungsform der Erfindung wird dies berücksichtigt, indem die Grenztemperaturen in Abhängigkeit von der Stellung einer verstellbaren Vorleitreihe des Verdichters vorgegeben werden. Selbstverständlich können auch andere Einflussgrössen, welche das Einsetzen einer potenziellen Eisbildung beeinflussen können, wie beispielsweise die Umgebungsluftfeuchte, bei der Festlegung der Grenztemperatur berücksichtigt werden. So können beispielsweise die Grenztemperaturen in Abhängigkeit von der Umgebungsluftfeuchte festgelegt werden. Es ist im Rahmen der Umsetzung der Erfindung auch möglich, aus der Umgebungstemperatur und weiteren Einflussgrössen, wie eben beispielsweise der Stellung einer verstellbaren Vorleitreihe und der Umgebungsluftfeuchte einen Parameter zu berechnen, und die Aktivierung bzw. Deaktivierung der Mittel zur Kühlung in Abhängigkeit von diesem Parameter vorzunehmen. Auch dies bedeutet letztlich aber nicht anderes, als dass die Mittel zur Einbringung des Flüssigkeitsmassenstroms in den Zuluftstrom des Verdichters aktiviert werden, wenn eine Grenztemperatur der Umgebungstemperatur überschritten ist, und gegebenenfalls zu Deaktivieren, wenn eine zweite Grenztemperatur unterschritten ist.

Die Grenztemperatur wird dabei als reine Funktion der Vorleitreihenstellung beim Schliessen der Vorleitreihe angehoben oder wenigstens konstant gehalten, und, in der Abhängigkeit von der Stellung der Vorleitreihe, beim Schliessen der Vorteitreihe jedenfalls nicht abgesenkt. Unter dem Begriff der Grenztemperatur als reine Funktion der Vorleitreihenstellung ist zu verstehen, dass diese Forderung jedenfalls dann erfüllt ist, wenn andere Parameter, von denen die Grenztemperatur potenziell ebenfalls abhängig ist, konstant sind. Im Falle, dass hier weitere Parameter Einfluss haben, beispielsweise die Leistung der Gasturbogruppe oder die Feuchtigkeit der Umgebungsluft, kann die Grenztemperatur unabhängig von der Vorleitreihenstellung variieren; für jede feste Kombination solcher potenzieller Parameter bleibt der geforderte Zusammenhang von Grenztemperatur und Vorleitreihenstellung aber bestehen.

In einer Ausführungsform der Erfindung wird eine weitere, feste untere Grenztemperatur vorgegebenen, unterhalb derer die Mittel zur Kühlung immer deaktiviert sind. Weiterhin kann auch ein unterer Grenzwert der Leistung der Gasturbogruppe vorgegeben werden, unterhalb dessen die Mittel stets deaktiviert sind. Dabei kann dieser Leistungsgrenzwert als Absolutleistung oder als relative Leistung der Gasturbogruppe vorgegeben werden. Ebenso kann ein unterer Grenzwert der Vorleitreihenstellung vorgegeben werden, wobei bei weiter geschlossener Vorleitreihe die Mittel zur Kühlung stets deaktiviert sind.

Die Kühlungsleistung der aktivierten Kühlungsvorrichtung, beispielsweise ein von einer geeigneten Vorrichtung in die Zuströmung des Verdichters eingebrachter Flüssigkeitsmassenstrom, wird in einer Variante des erfindungsgemässen Verfahrens in Abhängigkeit von dem vom Verdichter angesaugten Luftmassenstrom vorgegeben, welcher wiederum insbesondere von einer Vorleitreihenstellung abhängt. In einer anderen Ausführungsform der Erfindung wird die Kühlungsleistung, beispielsweise der in die Verdichterzuströmung eingebrachte Flüssigkeitsmassenstrom, in Abhängigkeit von der Leistung der Gasturbogruppe, deren relativer Leistung bezogen auf die Volllastleistung, der Verdichterendtemperatur, dem Verdichterenddruck, oder anderen geeigneten Prozessgrössen des Gasturbinenprozesses vorgegeben.

Die oben beschriebenen und in den Unteransprüchen charakterisierten Ausführungsformen der Erfindung können selbstverständlich untereinander kombiniert werden.

### Kurze Beschreibung der Figuren

Die Erfindung wird nachfolgend anhand von in der Zeichnung illustrierten Ausführungsbeispielen näher erläutert. Im Einzelnen zeigen

Figur 1 eine zur Durchführung des erfindungsgemässen Verfahrens geeignete Gasturbogruppe; und

Figur 2 eine beispielhafte Darstellung der Bereiche, in denen die Mittel zur Einbringung des Flüssigkeitsmassenstroms aktiviert respektive deaktiviert werden, in Abhängigkeit von der Umgebungstemperatur und der Stellung einer verstellbare Vorleitreihe.

Die nachfolgend dargestellten Ausführungsbeispiele sind lediglich instruktiv zu verstehen und dienen dem besseren Verständnis der Erfindung; selbstverständlich können in diesem Rahmen nicht alle Aspekte der in den Ansprüchen gekennzeichneten Erfindung beleuchtet werden.

### Wege zur Ausführung der Erfindung

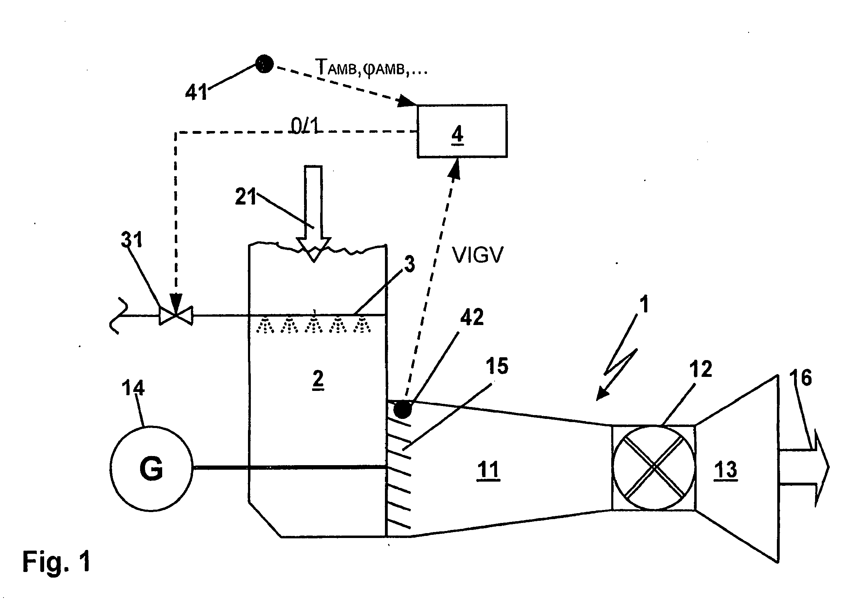

In Figur 1 ist eine zur Durchführung eines erfindungsgemässen Verfahrens geeignete Gasturbogruppe 1 dargestellt. Die aus dem Stand der Technik an sich bekannte Gasturbogruppe 1 weist einen Verdichter 11 auf, eine Brennkammer 12, eine Turbine 13, sowie einen Generator 14, welcher mit dem Verdichter 11 und der Turbine 13 auf einer gemeinsamen Welle angeordnet ist. Der Verdichter 11 weist weiterhin eine verstellbare Vorleitreihe 15 auf. Diese kann die Verdichterzuströmung unterschiedlich stark drosseln oder freigeben, wodurch der Luftmassenstrom der Gasturbogruppe 1 auf an sich bekannte und an anderen Orten hinreichend beschriebene Weise dem Lastzustand angepasst wird. Der Zuluftstrom 21 strömt dem Verdichter durch einen Zuströmkanal 2 zu; in oder an dem Zuströmkanal 2 sind üblicherweise weitere Einrichtungen wie Wetterschutzlamellen, Luftfiltereinrichtungen, Schalldämpfereinrichtungen und dergleichen angeordnet, welche dem Fachmann aber an sich geläufig sind und daher nicht dargestellt werden, da sie für die Ausführung der Erfindung nicht unmittelbar relevant sind. Aus der Turbine 13 strömt eine Rauchgasströmung 16 ab. Deren Restwärme kann ebenfalls auf an sich bekannte Weise weiter genutzt werden. In dem Zuströmkanal ist eine Vorrichtung 3 angeordnet, durch welche ein Flüssigkeitsmassenstrom in den Zuluftstrom 21 des Verdichters eingebracht werden kann. Die Verdunstung der Flüssigkeit im Zuluftstrom kühlt die Zuströmung zum Verdichter, und erhöht damit die Dichte der Luft, und, bei konstanter Stellung der Vorleitreihe 15, den Luftmassenstrom. Wenn über die Vorrichtung 3 mehr Flüssigkeit eingebracht wird, als im Zuluftstrom stromauf des Verdichters zu verdunsten vermag, so dringen Flüssigkeitstropfen in den Verdichter 11 ein. Dort verdunsten diese Tropfen mit fortschreitender Verdichtung, und bewerkstelligen damit eine intensive Innenkühlung des Verdichters 11. Aufgrund dieses Vorgangs sinkt die Leistungsaufnahme des Verdichters, und die zum Antrieb des Generators 14 zur Verfügung stehende Nutzleistung steigt. Darüber hinaus wird bei gleicher Nutzleistung das Temperaturniveau im Heissgasteil der Gasturbogruppe deutlich vermindert. Beim Einströmen in den Verdichter wird die Luft in den Schaufelgittern des Verdichters beschleunigt, wodurch die Temperatur am Verdichtereinlass absinkt. Diese Temperaturabsenkung wird um so ausgeprägter, je stärker die Zuströmung durch die verstellbare Vorleitreihe gedrosselt ist, also, je weiter die verstellbare Vorleitreihe geschlossen ist. Diese Temperaturabsenkung kann zur Kondensation von Feuchtigkeit aus der Ansaugluft und schliesslich zur Bildung von Eis führen. Der Aufbau von Eis im Zuströmbereich des Verdichters führt einerseits zu einer Verschlechterung der Aerodynamik: andererseits können sich ablösende Eisfragmente beim Eindringen in den Verdichter zu schwerwiegenden Beschädigungen der Verdichterschaufeln führen. Der Aufbau von Eis im Zuströmbereich des Verdichters muss also nach Möglichkeit vermieden werden. Im Stand der Technik sind unterschiedliche Möglichkeiten bekanntgeworden, der Verdichterzuströmung Wärme zuzuführen, und dadurch die Eisbildung am Verdichtereinlass zu vermeiden. Die Eindüsung einer Flüssigkeit in dem Zuströmkanal 2 hingegen erhöht die Gefahr der Eisbildung unter ungünstigen Bedingungen. Einerseits wird durch die Verdunstung der Flüssigkeit die Temperatur der Luft weiter abgesenkt; andererseits wird weitere Feuchtigkeit zugeführt, welche im Verdichtereinlass gefrieren kann. Daher wird bei bestimmten Umgebungsbedingungen die Einbringung von Flüssigkeit stromauf des Verdichters deaktiviert. Die dargestellte Gasturbogruppe weist wenigstens einen Sensor 41 für die Umgebungstemperatur T_{AMB} und, fakultativ, die Luftfeuchtigkeit ϕ _{AMB} der Umgebungsluft auf. Alternativ kann diese Messstelle auch im Zuströmkanal stromauf der Vorleitreihe angeordnet sein; es wird dann die Zuströmtemperatur gemessen. Die Messwerte werden im Funktionsblock 4 ausgewertet. Der Funktionsblock 4 ermittelt aus den gemessenen Werten, ob ein zulässiger oder ein unzulässiger Betriebszustand für die Flüssigkeitseindüsung vorliegt, und generiert entsprechend ein binäres Signal 0/1, welches auf das Stellorgan 31 einwirkt, und wodurch die Vorrichtung 3 zur Einbringung eines Flüssigkeitsmassenstroms in die Verdichterzuströmung aktiviert oder deaktiviert wird. Das heisst, wenn die Temperatur T_{AMB} einen zulässigen Minimalwert unterschreitet, wird die Vorrichtung deaktiviert. Auf der anderen Seite wird die Vorrichtung automatisch aktiviert, wenn ein Temperaturgrenzwert, welcher den Betrieb sicher erlaubt, überschritten wird. Diese Temperaturgrenzwerte könnten fakultativ abhängig von der Umgebungsluftfeuchte und/oder anderen Parametern festgelegt werden. Weiterhin wird an einer Messstelle 42 die Position VIGV der verstellbaren Vorleitreihe 15 ermittelt, und diese ebenfalls im Funktionsblock 4 ausgewertet. Die Grenztemperaturen, bei denen eine Aktivierung respektive eine Deaktivierung der Vorrichtung 3 erfolgt, werden in diesem Falle weiterhin abhängig von der Stellung der verstellbaren Vorleitreihe festgelegt. Dabei werden diese Temperaturen um so höher gewählt, je weiter die verstellbare Vorleitreihe geschlossen ist, da mit einer weit geschlossenen verstellbaren Vorleitreihe eine entsprechend grössere Temperaturabsenkung in der Vorleitreihe einhergeht. Der bei einer aktivierten Vorrichtung 3 eingebrachte Flüssigkeitsmassenstrom wird dabei beispielsweise im Verhältnis zu dem vom Verdichter angesaugten Luftmassenstrom festgelegt.

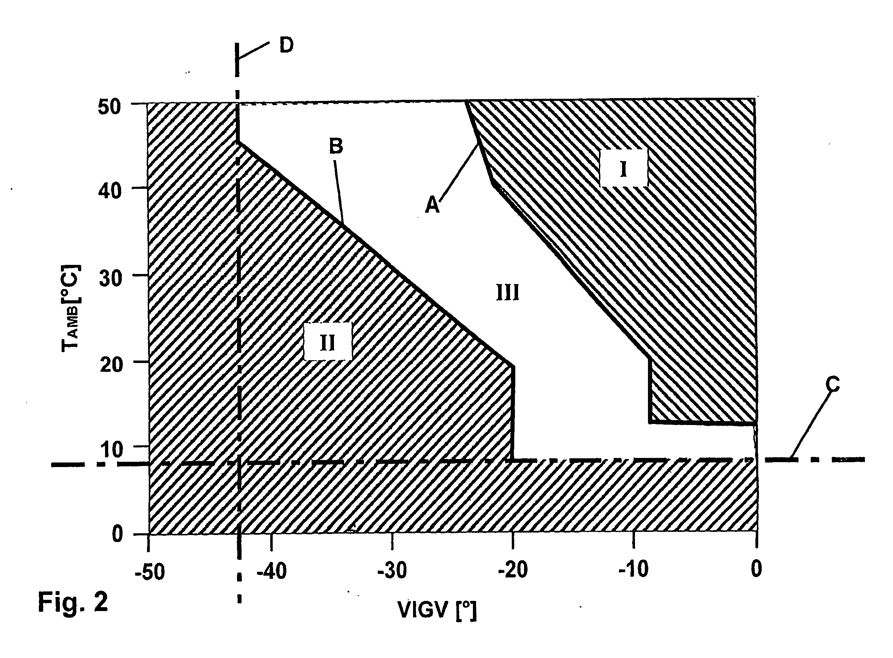

In der Figur 2 ist ein Beispiel dargestellt, wie die Bereiche, in denen die Vorrichtung zur Einbringung des Flüssigkeitsmassenstroms aktiviert oder deaktiviert ist, in Abhängigkeit von der Umgebungstemperatur und der Vorleitreihe festgelegt sein können. Dabei ist auf der senkrechten Achse die Umgebungstemperatur T_{AMB} aufgetragen, und auf der waagerechten Achse die Position VIGV der verstellbaren Vorleitreihe. Dabei bedeutet eine Vorleitreihenstellung von 0 ° eine maximal geöffnete Vorleitreihe. Zu negativen Winkelstellungen hin ist die verstellbare Vorleitreihe zunehmend geschlossen. Das heisst, in dem Diagramm findet sich links, bei -50 **°,** die maximal geschlossene Position der verstellbaren Vorleitreihe, und rechts, bei 0°, die maximal geöffnete Position der verstellbaren Vorleitreihe. Die Fläche des Diagramms ist in drei Bereiche I, II, und III unterteilt. Die mit A bezeichnete Linie stellt den Verlauf der Aktivierungs-Grenztemperatur über der Vorleitreihenstellung dar. Die mit B bezeichnete Linie stellt den Verlauf der Deaktivierungs-Grenztemperatur über der Vorleitreihenstellung dar. Beim Überschreiten der Linie A aus dem Bereich III in den Bereich I wird das Aktivierungssignal für die Mittel zur Einbringung des Flüssigkeitsmassenstroms auf aktiv gesetzt. Das heisst, im Bereich I ist die Eindüsungsvorrichtung 3 stets aktiviert. Beim Überschreiten der mit B gekennzeichneten Linie aus dem Bereich III in den Bereich II wird das Aktivierungssignal auf inaktiv gesetzt. Das heisst, im Bereich II ist die Vorrichtung 3 stets deaktiviert. Beim jeweils umgekehrten Überschreiten der Linien A und B wird der Aktivierungsstatus nicht geändert. Die Deaktivierungs-Grenztemperatur liegt dabei stets unterhalb der Aktivierungs-Grenztemperatur. Dazwischen ist der Bereich III ausgebildet. In diesem Bereich kann die Eindüsungsvorrichtung - oder sinngemäss auch andere Mittel zur Kühlung der Ansaugluft - sowohl aktiviert als auch deaktiviert sein. Dieser Zwischenbereich verhindert ein übernervöses Reagieren des automatischen Aktivierungs- und Deaktivierungsalgorithmus. Die mit C und D bezeichneten Linien bezeichnen absolute Grenzwerte der Umgebungstemperatur und der Vorleitreihenstellung, unterhalb derer die Vorrichtung stets deaktiviert ist.

Das vorstehend erläuterte Verfahren zur automatischen Aktivierung und Deaktivierung von Mitteln zur Kühlung der Zuströmung eines Verdichters einer Gasturbogruppe, beispielhaft einer Vorrichtung zur Einbringung eines Flüssigkeitsmassenstroms in die Zuströmung eines Verdichters einer Gasturbogruppe, ermöglicht es, diese Mittel immer dann zu aktivieren, wenn der Betriebszustand der Gasturbogruppe und die Umgebungsbedingungen dies erlauben. Dabei werden die Mittel auch unterhalb der Grund-Volllast der Gasturbogruppe, bei welcher die verstellbare Vorleitreihe vollständig geöffnet ist, aktiviert. Damit werden die Vorteile, welche die Kühlung bietet, insbesondere der erhöhte Wirkungsgrad aufgrund der geringeren Leistungsaufnahme des Verdichters, wann immer möglich genutzt, ohne dass hierfür die stetige Aufmerksamkeit des Bedienpersonals gefordert würde. Selbstverständlich kann im Rahmen der Erfindung auch eine Möglichkeit vorgesehen werden, beispielsweise zur Ersparnis von Wasser die Mittel manuell dauerhaft zu Deaktivieren. Bei tiefer Teillast der Gasturbogruppe wird beispielsweise zur Ersparnis von Wasser die Kühlung automatisch deaktiviert, ohne dass die Aufmerksamkeit des Bedienpersonals gefordert ist.

Die Erfindung ist beispielhaft anhand der Eindüsung eines Flüssigkeitsmassenstroms in die Zuströmung des Verdichters beschrieben; die Übertragung des automatischen Aktivierungs- und Deaktivierungsalgorithmus auf allgemeine Mittel zur Kühlung der Verdichterzuströmung ergibt sich für den Fachmann zwanglos.

### Bezugszeichenliste

1 Gasturbogruppe

2 Zuströmkanal

3 Mittel zur Kühlung,
Vorrichtung zur Einbringung eines Flüssigkeitsmassenstroms

4 Funktionsblock

11 Verdichter

12 Brennkammer

13 Turbine

14 Generator

15 verstellbare Vorleitreihe

16 Rauchgasstrom

21 Zuluftstrom

31 Stellorgan

41 Messstelle

42 Messstelte

A Verlauf der Aktivierungs-Grenztemperatur

B Verlauf der Deaktivierungs-Grenztemperatur

C absoluter unterer Temperaturgrenzwert

D absoluter Grenzwert der Vorleitreihenstellung

T_{AMB} Umgebungstemperatur

ϕ _{AMB} relative Luftfeuchte der Umgebungsluft

VIGV Stellung der verstellbaren Vorleitreihe

## Patentansprüche

1. Verfahren zum Betrieb einer Gasturbogruppe (1), umfassend, die Temperatur der Umgebungsluft (TAMB) und/oder die Temperatur in einem Zuströmkanal (2) der Gasturbogruppe stromauf des Verdichters (11) der Gasturbogruppe zu messen, stromauf des Verdichters der Gasturbogruppe angeordnete Mittel (3) zur Kühlung des Zuluftstroms des Verdichters (11) automatisch zu aktivieren, wenn eine erste Grenztemperatur (A) für diesen Messwert überschritten ist, **gekennzeichnet dadurch**, die Mittel (3) bei einer teilweise geschlossenen Stellung (VIGV) einer verstellbaren Vorleitreihe in Abhängigkeit der Temperatur der Umgebungsluft (TAMB) und/oder der Temperatur in einem Zuströmkanal (2) der Gasturbogruppe stromauf des Verdichters (11) der Gasturbogruppe (15) zu aktivieren.

2. Verfahren gemäss Anspruch 1, **gekennzeichnet dadurch**, die erste Grenztemperatur (A) in Abhängigkeit von der Stellung (VIGV) einer verstellbaren Vorleitreihe des Verdichters vorzugeben.

3. Verfahren gemäss einem der vorstehenden Ansprüche, **gekennzeichnet dadurch**, wenn eine zweite Grenztemperatur (B) unterschritten ist, die Mittel (3) zur Kühlung des Zuluftstroms automatisch zu deaktivieren.

4. Verfahren gemäss Anspruch 3, **gekennzeichnet dadurch**, die zweite Grenztemperatur (B) in Abhängigkeit von der Stellung (VIGV) einer verstellbaren Vorleitreihe des Verdichters vorzugeben.

5. Verfahren gemäss einem der Ansprüche 2 oder 4, **gekennzeichnet dadurch, dass** die erste (A) und/ oder zweite (B) Grenztemperatur wenigstens über einen Bereich der Vorleitreihenstellung umso höher ist, je weiter die Vorleitreihe geschlossen ist.

6. Verfahren gemäss Anspruch 5 , **gekennzeichnet dadurch**, die erste (A) und/ oder zweite (B) Grenztemperatur als reine Funktion der Vorleitreihenstellung beim Schliessen der Vorleitreihe anzuheben oder wenigstens konstant zu halten, und die Grenztemperatur als reine Funktion der Stellung der Vorleitreihe beim Schliessen der Vorleitreihe jedenfalls nicht abzusenken.

7. Verfahren gemäss einem der vorstehenden Ansprüche, **gekennzeichnet dadurch**, eine feste untere Grenztemperatur (C) vorzugeben, unterhalb derer die Mittel immer deaktiviert sind.

8. Verfahren gemäss einem der vorstehenden Ansprüche, wobei die Mittel zur Kühlung einen Verdunstungskühler umfassen.

9. Verfahren gemäss einem der vorstehenden Ansprüche, wobei die Mittel zur Kühlung einen Wärmetauscher umfassen, welcher im aktivierten Zustand Wärme aus dem Zuluftstrom abführt.

10. Verfahren gemäss einem der vorstehenden Ansprüche, wobei die Mittel zur Kühlung eine Vorrichtung zur Einbringung eines Flüssigkeitsmassenstroms in den Zuluftstrom umfassen, **gekennzeichnet dadurch**, bei aktivierten Mitteln einen Flüssigkeitsmassenstrom in den Zuluftstrom einzubringen.

11. Verfahren gemäss einem der vorstehenden Ansprüche, **gekennzeichnet dadurch**, eine erste Verzögerungszeit festzulegen, und nach dem Überschreiten der ersten Grenztemperatur (A) die Mittel erst zu aktivieren, wenn die Grenztemperatur wenigstens über die gesamte Verzögerungszeit überschritten wurde.

12. Verfahren gemäss Anspruch 11, **dadurch gekennzeichnet**, die zweite Grenztemperatur (B) kleiner als die erste Grenztemperatur (A) zu wählen.

13. Verfahren gemäss einem der Ansprüche 11 oder 12, **gekennzeichnet dadurch**, eine zweite Verzögerungszeit festzulegen, und nach dem Unterschreiten der zweiten Grenztemperatur (B) die Mittel erst zu deaktivieren, wenn die Grenztemperatur wenigstens über die gesamte zweite Verzögerungszeit unterschritten wurde.

14. Verfahren gemäss einem der vorstehenden Ansprüche, **gekennzeichnet dadurch**, die Umgebungsluftfeuchte zu messen, und wenigstens eine erste (A) und/ oder zweite (B) Grenztemperatur in Abhängigkeit von der gemessenen Luftfeuchtigkeit vorzugeben.

15. Verfahren gemäss einem der vorstehenden Ansprüche, **gekennzeichnet dadurch**, einen unteren Grenzwert der Leistung der Gasturbogruppe vorzugeben, unterhalb dessen die Mittel stets deaktiviert sind.

16. Verfahren gemäss Anspruch 15, **gekennzeichnet dadurch**, den Leistungsgrenzwert als relative Leistung der Gasturbogruppe vorzugeben.

17. Verfahren gemäss einem der Ansprüche 3 oder 11 bis 16, **gekennzeichnet dadurch**, einen Grenzwert (D) der Vorleitreihenstellung vorzugeben, wobei bei weiter geschlossener Vorleitreihe die Mittel stets deaktiviert sind.

18. Verfahren gemäss einem der vorstehenden Ansprüche, **gekennzeichnet dadurch**, die von den Mitteln aufgebrachte Kühlungsleistung in Abhängigkeit von dem vom Verdichter angesaugten Luftmassenstrom vorzugeben.

19. Verfahren gemäss einem der vorstehenden Ansprüche, **gekennzeichnet dadurch**, einen von einer Vorrichtung zur Einbringung eines Flüssigkeitsmassenstroms in den Zuluftstrom eingebrachten Flüssigkeitsmassenstrom in Abhängigkeit von dem vom Verdichter angesaugten Luftmassenstrom vorzugeben.

## Claims

1. Method for operating a gas turbine group (1), comprising measuring the temperature of the ambient air (T_{AMB}) and/or the temperature in an inflow duct (2) of the gas turbine group, upstream of the compressor (11) of the gas turbine group, and automatically activating means (3), arranged upstream of the compressor of the gas turbine group, for cooling the supply airflow of the compressor (11) when a first limit temperature (A) for this measurement value is overshot, **characterized in that** the means (3) are activated in the case of a partially closed position (VIGV) of an variable inlet guide vane row as a function of the temperature of the ambient air (TAMB) and/or of the temperature in an inflow duct (2) of the gas turbine group upstream of the compressor (11) of the gas turbine group (15).

2. Method according to Claim 1, **characterized in that** the first limit temperature (A) is predetermined as a function of the position (VIGV) of an variable inlet guide vane row of the compressor.

3. Method according to one of the preceding claims, **characterized in that**, when a second limit temperature (B) is undershot, the means (3) for cooling the supply airflow are deactivated automatically.

4. Method according to Claim 3, **characterized in that** the second limit temperature (B) is predetermined as a function of the position (VIGV) of an variable inlet guide vane row of the compressor.

5. Method according to either one of Claims 2 and 4, **characterized in that** the first (A) and/or second (B) limit temperature is the higher, at least over a range of the position of the initial guide blade cascade, the further the initial guide blade cascade is closed.

6. Method according to Claim 5, **characterized in that** the first (A) and/or second (B) limit temperature is raised or at least kept constant as a pure function of the position of the initial guide blade cascade during the closing of the initial guide blade cascade, and the limit temperature is in any event not lowered as a pure function of the position of the initial guide blade cascade during the closing of the initial guide blade cascade.

7. Method according to one of the preceding claims, **characterized in that** a fixed lower limit temperature (C) is predetermined, below which the means are always deactivated.

8. Method according to one of the preceding claims, the cooling means comprising an evaporation cooler.

9. Method according to one of the preceding claims, the cooling means comprising a heat exchanger which, in the activated state, removes heat from the supply airflow.

10. Method according to one of the preceding claims, the cooling means comprising a device for introducing a liquid mass flow into the supply airflow, **characterized in that**, with the means activated, a liquid mass flow is introduced into the supply airflow.

11. Method according to one of the preceding claims, **characterized in that** a first delay time is fixed and, after the overshooting of the first limit temperature (A), the means are activated only when the limit temperature has been overshot at least for the entire delay time.

12. Method according to Claim 11, **characterized in that** the second limit temperature (B) is selected to be lower than the first limit temperature (A).

13. Method according to either one of Claims 11 and 12, **characterized in that** a second delay time is fixed and, after the undershooting of the second limit temperature, the means are deactivated only when the limit temperature has been undershot at least for the entire second delay time.

14. Method according to one of the preceding claims, **characterized in that** the ambient atmospheric moisture is measured and at least a first (A) and/or second (B) limit temperature is predetermined as a function of the measured atmospheric moisture.

15. Method according to one of the preceding claims, **characterized in that** a lower limit value of the power of the gas turbine group is predetermined, below which the means are always deactivated.

16. Method according to Claim 15, **characterized in that** the power limit value is predetermined as a relative power of the gas turbine group.

17. Method according to one of claims 3 or 11 to 16, **characterized in that** a limit value (D) of the position of the initial guide blade cascade is predetermined, the means always being deactivated when the initial guide blade cascade is closed further.

18. Method according to one of the preceding claims, **characterized in that** the cooling power applied by the means is predetermined as a function of the mass airflow sucked in by the compressor.

19. Method according to one of the preceding claims, **characterized in that** a liquid mass flow introduced into the supply airflow by a device for introducing a liquid mass flow is predetermined as a function of the mass airflow sucked in by the compressor.

## Revendications

1. Procédé pour faire fonctionner un groupe turbine à gaz (1), comprenant :
la mesure de la température de l'air ambiant (TAMB) et/ou de la température qui règne dans un canal d'amenée (2) du groupe turbine à gaz en amont du compresseur (11) du groupe turbine à gaz et l'activation automatique de moyens (3) de refroidissement de l'écoulement d'air amené au compresseur (11) disposés en amont du compresseur du groupe turbine à gaz lorsqu'une première température limite (A) de cette valeur de mesure est dépassée,
**caractérisé par**
l'activation des moyens (3) en fonction de la température de l'air ambiant (TAMB) et/ou de la température qui règne dans un canal d'amenée (2) du groupe turbine à gaz en amont du compresseur (11) du groupe (15) de turbine à gaz lorsqu'une série ajustable de pré-guidage est en position partiellement fermée (VIGV).

2. Procédé selon la revendication 1, **caractérisé par** la définition de la première température limite (A) en fonction de la position (VIGV) d'une série ajustable de pré-guidage du compresseur.

3. Procédé selon l'une des revendications précédentes,
**caractérisé par** la désactivation automatique des moyens (3) de refroidissement de l'écoulement d'air d'amenée lorsqu'une deuxième température frontière (B) n'est pas atteinte.

4. Procédé selon la revendication 3, **caractérisé par** la définition de la deuxième température limite (B) en fonction de la position (VIGV) d'une série ajustable de pré-guidage du compresseur.

5. Procédé selon l'une des revendications 2 ou 4, **caractérisé en ce que** la première température limite (A) et/ou la deuxième température limite (B) sont d'autant plus élevées au moins sur une partie des positions de la série de pré-guidage que la série de pré-guidage est davantage fermée.

6. Procédé selon la revendication 5, **caractérisé par** le relèvement ou au moins le maintien de la première température limite (A) et/ou de la deuxième température limite (B) à des valeurs constantes uniquement en fonction de la position de la série de pré-guidage lors de la fermeture de la série de pré-guidage, et en tout cas le non-abaissement de la température limite uniquement en fonction de la position de la série de pré-guidage lors de la fermeture de la série de pré-guidage.

7. Procédé selon l'une des revendications précédentes, **caractérisé par** a définition d'une température limite inférieure fixe (C) en dessous de laquelle les moyens sont toujours désactivés.

8. Procédé selon l'une des revendications précédentes, dans lequel les moyens de refroidissement comportent un refroidisseur à évaporation.

9. Procédé selon l'une des revendications précédentes, dans lequel les moyens de refroidissement comportent un échangeur de chaleur qui évacue de la chaleur de l'écoulement d'air d'amenée lorsqu'il est à l'état activé.

10. Procédé selon l'une des revendications précédentes, dans lequel les moyens de refroidissement comportent un dispositif qui incorpore un écoulement massique de liquide dans l'écoulement d'air d'amenée, **caractérisé par** l'incorporation d'un écoulement massique de liquide dans l'écoulement d'air d'amenée lorsque les moyens sont activés.

11. Procédé selon l'une des revendications précédentes, **caractérisé par** la définition d'une première durée de temporisation et par l'activation des moyens uniquement après dépassement de la première température limite (A) si la température limite a été dépassée au moins pendant toute la durée de la temporisation.

12. Procédé selon la revendication 11, **caractérisé par** la sélection d'une deuxième température limite (B) inférieure à la première température limite (A).

13. Procédé selon l'une des revendications 11 ou 12, **caractérisé par** la définition d'une deuxième durée de temporisation et par la désactivation des moyens uniquement après que la deuxième température limite (B) n'a pas été atteinte si la température limite n'a pas été atteinte au moins pendant toute la deuxième durée de temporisation.

14. Procédé selon l'une des revendications précédentes, **caractérisé par** la mesure de l'humidité de l'air ambiant et par la définition d'au moins une première température limite (A) et/ou d'une deuxième température limite (B) en fonction de l'humidité mesurée dans l'air.

15. Procédé selon l'une des revendications précédentes, **caractérisé par** la définition d'une valeur limite inférieure de la puissance du groupe turbine à gaz, en dessous de laquelle les moyens sont toujours désactivés.

16. Procédé selon la revendication 15, **caractérisé par** la définition de la valeur limite de puissance comme puissance relative du groupe turbine à gaz.

17. Procédé selon l'une des revendications 3 ou 11 à 16, **caractérisé par** la définition d'une valeur limite (D) de la position de la série de pré-guidage, les moyens étant toujours désactivés lorsque la série de pré-guidage est fermée davantage.

18. Procédé selon l'une des revendications précédentes, **caractérisé par** la définition de la puissance de refroidissement appliquée par les moyens en fonction de l'écoulement massique d'air aspiré par le compresseur.

19. Procédé selon l'une des revendications précédentes, **caractérisé par** la définition d'un écoulement massique de liquide incorporé dans l'écoulement d'air d'amenée par un dispositif d'incorporation d'un écoulement massique de liquide en fonction de l'écoulement massique d'air aspiré par le compresseur.
